# EUROPÄISCHE PATENTSCHRIFT

(11) **EP 1 153 314 B1**
(45) Veröffentlichungstag und Bekanntmachung des Hinweises auf die Patenterteilung: **26.04.2006**
(21) Anmeldenummer: 00909019.2
(22) Anmeldetag: 09.02.2000
(51) Int. Cl.: G01S 5/04, G01S 3/30, H01Q 21/20

(54) **VERFAHREN UND VORRICHTUNG ZUR POSITIONSBESTIMMUNG**
METHOD AND DEVICE FOR DETERMINING A POSITION
PROCEDE ET DISPOSITIF POUR DETERMINER UNE POSITION

(30) Priorität: 19.02.1999 DE 19907024
(43) Veröffentlichungstag der Anmeldung: 14.11.2001
(73) Patentinhaber: Geometrie Concern Verwaltungs- und Beteiligungsgesellschaft mbH, 97232 Giebelstadt (DE)
(72) Erfinder: ANGERMEIER, Rüdiger, D-97222 Rimpar (DE); SCHRAUD, Ernst, D-97941 Tauberbischofsheim (DE)
(74) Vertreter: Tappe, Hartmut
(86) Internationale Anmeldenummer: PCT/DE2000/000382
(87) Internationale Veröffentlichungsnummer: WO 2000/049425

(56) Entgegenhaltungen:
- DE-A- 4 209 077
- GB-A- 2 337 170
- US-A- 4 099 879
- US-A- 5 047 776
- US-A- 5 227 803
- US-A- 5 319 188

## Beschreibung

Die vorliegende Erfindung betrifft ein Verfahren zur Positionsbestimmung gemäß dem Anspruch 1 sowie ein System zur Anwendung des Verfahrens und Bestimmung der Position einer beliebig im Raum angeordneten Sende-/Empfangs-Einrichtung gegenüber zumindest zwei definiert zueinander im Raum angeordneten Sende-/Empfangs-Einrichtungen gemäß dem Anspruch 2.

Verfahren und Vorrichtungen zur Positionsbestimmung, bei denen eine Richt- oder Peilantenne verwendet wird und die Positionierung sich infolge der Ausrichtung der Antenne gegenüber einem Sender in Abhängigkeit von dem maximalen Empfangssignal ergibt, sind hinlänglich bekannt. Bei derartigen Verfahren oder Vorrichtungen ist es jedoch erforderlich, dass eine Einrichtung vorgesehen wird, die eine Ausrichtung bzw. Nachführung der Richtantenne in Abhängigkeit von der Feldstärke des empfangenen Signals durchführt. Aufgrund der hierdurch erforderlichen mechanischen Einrichtungen eignen sich derartige Vorrichtungen in der Regel nicht zu einer Miniaturisierung.

Abweichend von den vorgenannten Vorrichtungen, die noch mit einem vergleichsweise geringen apparativen Aufwand realisierbar sind, sind auch sogenannte "Satelliten-Positionierungssysteme" bekannt, die auch als "Global Positioning Systems" (GPS) bezeichnet mittlerweile Einzug in Alltagsanwendungen, wie beispielsweise als Fahrzeug-Navigationssysteme, gefunden haben.

Diese Systeme zeichnen sich jedoch durch einen insgesamt enormen apparativen Aufwand aus. Darüber hinaus sind GPS-Einrichtungen zur Positionsbestimmung in geschlossenen Räumen häufig nicht geeignet, insbesondere dann, wenn es sich um Räume mit massiven Wandungen, also Betonbauten oder Unterflurbauten, handelt.

Aus der DE 42 09 077 A1 ist ein Verfahren sowie eine Vorrichtung zur Bestimmung der Entfernung eines Zieles von mindestens zwei beliebig in Bezug auf das Ziel angeordneten und mit Mitteln zur Winkelbestimmung des Ziels ausgerüsteten Minen bekannt. Das bekannte Verfahren zur Positionsbestimmung basiert auf einem Triangulationsverfahren mit Sende-/Empfangs-Einrichtungen.

Aus der US 5,047,776 A ist ein Ortungs- und Navigationssystem bekannt, das Sende-/Empfangs-Einrichtungen mit einer Trägereinrichtung zur Anordnung einer Vielzahl von Antenneneinheiten auf einer Kugeloberfläche sowie eine Signalerzeugungseinrichtung und eine Prozessoreinrichtung aufweist.

Der vorliegenden Erfindung liegt die Aufgabe zugrunde, ein Verfahren bzw. eine zur Durchführung des Verfahrens geeignete Vorrichtung vorzuschlagen, die eine Positionsbestimmung mit minimalem, leicht miniaturisierbarem apparativen Aufwand ermöglicht, und das bzw. die auch innerhalb geschlossener Räume nutzbar ist.

Diese Aufgabe wird durch ein Verfahren mit den Merkmalen des Anspruchs 1 gelöst.

Das erfindungsgemäße Verfahren umfasst die Verfahrensschritte:

Definition eines lokalen Koordinatenraums durch Anordnung von zumindest zwei Sende-/Empfangs-Einrichtungen mit einer Vielzahl von Antenneneinheiten, die in definierter Verteilung auf einer Kugeloberfläche der Sende-/Empfangs-Einrichtungen angeordnet sind, im Raum, derart, dass sich die Sende-/Empfangs-Einrichtungen mit bekanntem horizontalem und vertikalem Abstand in definierter Relativanordnung befinden,
- Emission eines Signals S1 über die Antenneneinheiten der ersten Sende-/Empfangs-Einrichtung und Empfang des Signals S1 über die Antenneneinheiten der zweiten Sende-/Empfangs-Einrichtung, Ermittlung des Abstandsvektors zwischen der ersten Sende-/Empfangs-Einrichtung und der zweiten Sende-/Empfangs-Einrichtung durch Bestimmung der Antenneneinheit der zweiten Sende-/Empfangs-Einrichtung mit maximaler Empfangsstärke des Signals und Emission eines Signals S2 über die Antenneneinheiten der zweiten Sende-/Empfangs-Einrichtung und Empfang des Signals S2 über die Antenneneinheiten der ersten Sende-/Empfangs-Einrichtung sowie Ermittlung des Abstandsvektors zwischen der zweiten Sende-/Empfangs-Einrichtung und der ersten Sende-/Empfangs-Einrichtung durch Bestimmung der Antenneneinheit der ersten Sende-/Empfangs-Einrichtung mit maximaler Empfangsstärke des Signals,
- Positionsbestimmung einer dritten, beliebig im lokalen Koordinatenraum angeordneten Sende-/Empfangs-Einrichtung durch Emission eines Signals S3 über die Antenneneinheiten der dritten Sende-/Empfangseinrichtung und Empfang des Signals S3 über die Antenneneinheiten der ersten und zweiten Sende-/Empfangs-Einrichtung, Bestimmung der Antenneneinheiten der ersten und zweiten Sende-/Empfangs-Einrichtung mit maximaler Empfangsstärke des Signals, Ermittlung der Richtungsvektoren zwischen der ersten und der dritten Sende-/Empfangs-Einrichtung und der zweiten und der dritten Sende-/Empfangs-Einrichtung sowie Bestimmung des Schnittpunkts der Richtungsvektoren zur Bestimmung der Position der dritten Sende-/Empfangs-Einrichtung.

Das erfindungsgemäße System zur Positionsbestimmung weist die Merkmale des Anspruchs 2 auf.

Das erfindungsgemäße System zur Bestimmung der Position einer beliebig im Raum angeordneten Sende-/Empfangs-Einrichtung gegenüber zumindest zwei definiert zueinander im Raum angeordneten Sende-/Empfangs-Einrichtungen gemäß dem Verfahren nach Anspruch 1 umfaßt zumindest drei Sende-/Empfangs-Einrichtungen, wobei die Sende-/Empfangs-Einrichtungen jeweils eine Antenneneinrichtung mit einer Vielzahl in definierter Verteilung auf einer Kugeloberfläche angeordneten Antenneneinheiten und eine Signalerzeugungseinrichtung, wobei zwei Sende-/Empfangs-Einrichtungen als zumindest temporär ortsfest in einem lokalen Koordinatenraum angeordnete Einrichtungen ausgeführt sind und die weitere Sende-/Empfangs-Einrichtung relativ zu den Einrichtungen bewegbar ist.

Zum Aufbau des erfindungsgemäßen Systems nach Anspruch 2 dient eine Sende-/Empfangs-Einrichtung mit einer Trägereinrichtung zur Anordnung einer Vielzahl von Antenneneinheiten einer Antenneneinrichtung auf einer Kugeloberfläche, einer Signalerzeugungseinrichtung und einer Prozessoreinrichtung, wobei die Signalerzeugungseinrichtung in Abhängigkeit von der Prozessoreinrichtung Signale erzeugt, und die Prozessoreinrichtung durch Vergleich der Empfangsstärken der Signale die Antenneneinheit der Antenneneinrichtung mit der maximalen Empfangsstärke ermitteln kann.

Das erfindungsgemäße Verfahren zur Positionsbestimmung nach Anspruch 1 ermöglicht die vom inertialen System unabhängige Definition eines lokalen Koordinatensystems durch zwei Sende-/Empfangs-Einrichtungen und die räumliche Lagebestimmung einer dritten Sende-/Empfangs-Einrichtung innerhalb des lokalen Koordinatenraums. Hiermit sind exakte Positionsbestimmungen unabhängig von einem äußeren System möglich, so daß Einschränkungen bei der Durchführung des Verfahrens, wie sie beispielsweise beim GPS vorliegen und bereits vorstehend geschildert wurden, nicht gegeben sind.

Da das erfindungsgemäße Verfahren auf eine Ausrichtung einer Antenneneinheit entsprechend einer maximalen Signalstärke verzichtet und statt dessen eine Vielzahl von auf einer Kugeloberfläche angeordneten Antenneneinheiten zur Definition eines Positionssignals verwendet, indem diejenige Antenneneinheit ermittelt wird, die das maximale Empfangssignal aufweist, kann eine einfache und unveränderbare Anordnung der Antenneneinheiten gewählt werden, wodurch der mechanische Aufbau des Systems und der jeweiligen Sende-/Empfangs-Einrichtung erheblich vereinfacht wird und eine Miniaturisierung leicht durchführbar ist. Für die im System zur Positionsbestimmung verwendeten Sende-/Empfangs-Einrichtungen sind unterschiedliche Ausführungsvarianten denkbar, je nach dem, ob es ausreichend ist, lediglich die Position einer dritten Sende-/Empfangs-Einrichtung gegenüber zwei raumfest angeordneten Sende-/Empfangs-Einrichtungen zu bestimmen, oder ob die dritte Sende-/Empfangs-Einrichtung als aktive mobile Sende-/Empfangs-Einrichtung ausgebildet ist, die aktiv die jeweilige Position erfaßt, um eine zurückgelegte Wegstrecke berechnen zu können.

Nachfolgend wird das erfindungsgemäße Verfahren sowie ein zur Durchführung des erfindungsgemäßen Verfahrens geeignetes System unter Verwendung von geeigneten Sende-/Empfangs-Einrichtungen anhand der Zeichnungen näher erläutert. Es zeigen:
- **Fig. 1**: ein Positionsbestimmungssystem mit drei Sende-/Empfangs-Einrichtungen;
- **Fig. 2**: eine Sende-/Empfangs-Einrichtung;
- **Fig. 3**: eine Sende-/Empfangs-Einrichtung als Funktionsschema;
- **Fig. 4**: den Einsatz eines Positionsbestimmungssystems im Tunnelbau.

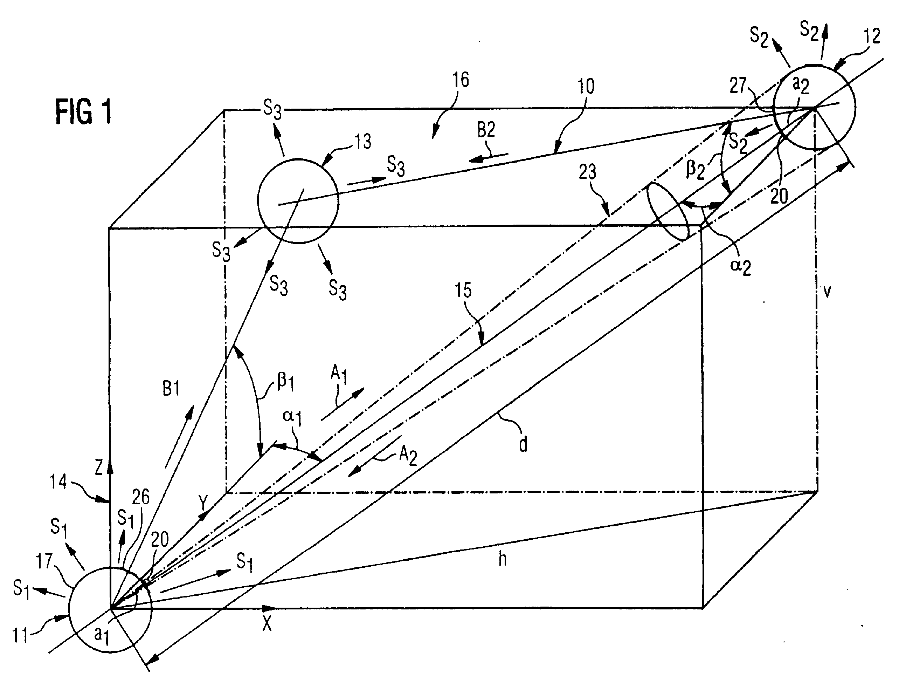

**Fig. 1** zeigt ein Positionsbestimmungssystem 10 mit drei Sende-EmpfangsEinrichtungen 11, 12 und 13, die in einem lokalen Koordinatensystem 14 angeordnet sind. Auf einer Raumdiagonalen 15 sind die beiden Sende-/Empfangs-Einrichtungen 11 und 12 in einem bekannten Abstand d angeordnet und definieren im vorliegenden Fall diagonal einander gegenüberliegende Eckpunkte eines lokalen Koordinatenraums 16. Der Abstand d ist definiert durch die horizontale Entfernung h und die vertikale Entfernung v der Sende-/Empfangs-Einrichtungen 11 und 12 voneinander.

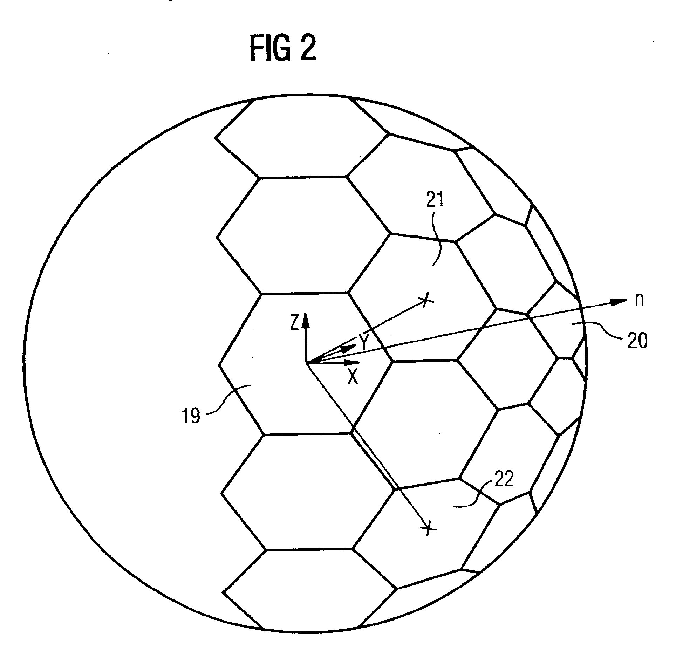

Bei dem Verfahren zur Positionsbestimmung der beliebig im Koordinatenraum 16 angeordneten Sende-/Empfangs-Einrichtung 13 mittels des in **Fig. 1** dargestellten Positionsbestimmungssystems 10 erfolgt zunächst eine Definition des Koordinatenraums 16 durch die Lage der Sende-/Empfangs-Einrichtungen 11 und 12. Hierzu wird von einer auf einer Kugeloberfläche 17 der Sende-/Empfangs-Einrichtung 11 angeordneten Antenneneinrichtung 18, die eine Vielzahl Antenneneinheiten 19 bis 22 umfaßt **(Fig. 2),** ein Signal S1 emittiert. Wegen der Kugeloberfläche 17 der Antenneneinrichtung 18 erfolgt die Abgabe des Signals S1 gleichmäßig in den die Kugeloberfläche 17 umgebenden Raum, so daß innerhalb eines von der Sende-/Empfangs-Einrichtung 11 emittierten Signalkegels 23 das Signal S1 auch auf die Kugeloberfläche 17 der Sende-/Empfangs-Einrichtung 12 trifft. Entsprechend dem Oberflächenwinkel, mit dem das Signal S1 auf die Kugeloberfläche 17 bzw. die auf der Kugeloberfläche 17 verteilt angeordneten Antenneneinheiten 19 bis 22 **(Fig. 2)** auftrifft, wird das Signal S1 von den Antenneneinheiten 19 bis 22 mit unterschiedlicher Signalstärke empfangen. Die maximale Signalstärke liegt vor, wenn das Signal parallel zur Flächennormalen n **(Fig. 2)** auf die Oberfläche der Antenneneinheit 19 bis 22 auftrifft. Durch das maximale Empfangssignal ist die Antenneneinheit 20 der Sende-/Empfangs-Einrichtung 12 definiert, die auf der Raumdiagonalen 15 angeordnet ist. In entsprechender Weise, nämlich durch Emission eines zweiten Signals S2 von der Antenneneinrichtung 18 der Sende-/Empfangs-Einrichtung 12 läßt sich die Antenneneinheit 20 der Sende-/Empfangs-Einrichtung 11 mit maximaler Stärke des Empfangssignals bestimmen, die ebenfalls auf der Raumdiagonalen 15 angeordnet ist. Über die beiden Antenneneinheiten 20, die auf der gemeinsamen Raumdiagonalen 15 angeordnet sind, ist somit die Position der im Koordinatenraum 16 fest angeordneten Sende-/Empfangs-Einrichtungen 11 und 12 zueinander definiert. Über die beispielsweise durch geodätische Messung definierten Abstandswerte h und v läßt sich nun der Abstandsvektor Ä₁ bzw. Ä₂ zwischen den Sende-/Empfangs-Einrichtungen 11 und 12 bestimmen.

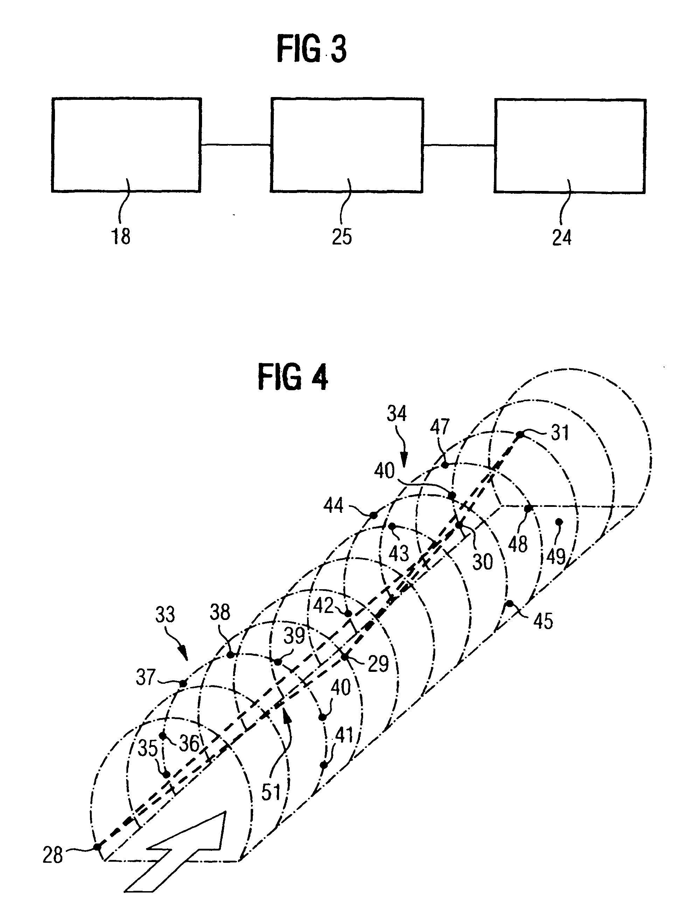

Durch den Abstandsvektor Ä₁ bzw. den Abstandsvektor Ä₂ sind die relative Lage und Entfernung der Sende-/Empfangseinrichtungen 11 und 12 definiert und entsprechende Null- oder Bezugsrichtungen a₁ bzw. a₂ für beide Sende-/Empfangs-Einrichtungen 11 und 12 gegeben. Diese Bezugsrichtungen a₁ und a₂ sowie die Entfernung d zwischen den Sende-/Empfangs-Einrichtungen 11 und 12 werden in einer Speichereinrichtung 24 **(Fig. 3)** jeder Sende-/Empfangs-Einichtung 11, 12 gespeichert.

Das in **Fig. 1** dargestelle Positionsbestimmungssystem 10 umfaßt neben den raumfest angeordneten Sende-/Empfangseinrichtungen 11 und 12 die Sende-/Empfangs-Einrichtung 13, die beliebig und stationär im Raum 16 angeordnet ist. Wie die Sende-/Empfangs-Einrichtungen 11, 12 weist die Sende-/Empfangs-Einrichtung 13 auf einer Kugeloberfläche 17 eine Antenneneinrichtung 18 mit einer Vielzahl von Antenneneinheiten 19 bis 22 auf. Darüber hinaus ist die Sende-/Empfangs-Einrichtung 13 wie die Sende-/Empfangs-Einrichtungen 11, 12 mit einer Signalerzeugungseinrichtung 25 **(Fig. 3)** versehen, so daß von der Kugeloberfläche 17 der Sende-/Empfangs-Einrichtung 13 ein Signal S3 gleichmäßig in den umgebenden Raum emittiert werden kann. Entsprechend den vorstehend bereits ausführlich erläuterten Zusammenhängen wird in Abhängigkeit von der maximalen Empfangsstärke des Signals der Richtung des Signals S3 in den Sende-/Empfangs-Einrichtungen 11, 12 eine bestimmte Antenneneinheit 26 bzw. 27 definiert. Aus der bekannten Relativlage zwischen den Antenneneinheiten 20 mit der Null- oder Bezugsrichtung a₁ und a₂ der Sende-/Empfangs-Einrichtungen 11, 12 und den Antenneneinheiten 26 und 27 berechnet eine Prozessoreinrichtung der Sende-/Empfangs-Einrichtungen 11, 12 die jeweiligen Positionswinkel α₁, β₁ und α₂, β₂. Damit sind die Richtungsvektoren B₁ und B₂ bekannt, deren Schnittpunkt die Position der dritten Sende-/Empfangs-Einrichtung 13 bestimmt.

Aus der vorliegenden Schi Iderung wird deutlich, daß die Sende-/Empfangs-Einrichtung 13 auch lediglich als Sendeeinrichtung ausgebildet sein kann, um die Position der Einrichtung bestimmen zu können. Soll hingegen die Einrichtung 13 als aktive Einrichtung ausgebildet sein, die beispielsweise in Abhängigkeit von dem zurückgelegten Weg als Leiteinrichtung bestimmte Funktionen auslöst, ist es notwendig, die Einrichtung 13 nicht nur als Sendeeinrichtung sondern auch als Empfangseinrichtung auszubilden, um von den Einrichtungen 11 und 12 Informationen über die momentane Position zu erhalten und in Abhängigkeit hiervon entsprechende Signale zur Funktionsauslösung zu emittieren.

Das in **Fig.1** beispielhaft dargestellte Positionsbestimmungssystem 10 kann neben den Sende-/Empfangseinrichtungen 11 und 12 um weitere Sende-/Empfangseinrichtungen, die ebenfalls zur Bestimmung des Koordinatenraum 16 dienen, ergänzt werden. Durch eine derartige Überbestimmung des Koordinatenraums 16 kann einerseits die Genauigkeit der Positionierung der Sende-/Empfangseinrichtung 13 erhöht werden. Andererseits können etwaige Funktionsfehler einer oder gegebenenfalls mehrerer Sende-/Empfangseinrichtungen kompensiert werden.

**Fig. 4** zeigt ein Beispiel für den Einsatz eines Positionsbestimmungssystems im Tunnelbau. Hierzu sind in **Fig. 4** verschiedene Schnitte einer Tunnelröhre 32 dargestellt. Das hier durch insgesamt vier raumfeste Einrichtungen 28, 29, 30 und 31 definierte Bezugssystem 51, das entsprechend der vereinfachten prinzipiellen Darstellung in **Fig. 1** den lokalen Koordinatenraum definiert, erstreckt sich in Längsrichtung der Tunnelröhre 32. Weiterhin befinden sich zwei Systeme 33, 34 mit jeweils sieben Einrichtungen 35 bis 41 und 42 bis 48 in der Tunnelröhre 32. Des weiteren ist eine mobile Einrichtung 49 vorgesehen. Die Einrichtungen 35 bis 41 können als reine Sendeeinrichtungen oder auch als Sende-/Empfangseinrichtungen ausgebildet sein und dienen zur Bestimmung von Deformationen im Bereich eines Tunnelröhrenschnitts 50 durch Kontrolle bzw. Erfassung der Positionsänderungen der einzelnen Einrichtungen. Das gleiche gilt für die Einrichtungen 42 bis 48, die nicht nur Deformationen im Tunnelprofil, sondern darüber hinaus auch relative Deformationen in Tunnelrichtung erfassen. Die mobile Einrichtung 49 hingegen ist als Sende- und Empfangsrichtung ausgebildet und beispielsweise auf einer mobilen, in der Tunnelröhre 32 verfahrbaren Kommandoeinheit angeordnet, die ihrerseits Befehle an verschiedene Bearbeitungsvorrichtungen, wie beispielsweise eine Bohrlafette oder dergleichen, übermittelt.

## Patentansprüche

1. Verfahren zur Positionsbestimmung im Raum aufweisend die Verfahrenschritte:
- Definition eines lokalen Koordinatenraumes (16) durch Anordnung von zumindest zwei Sende-/Empfangs-Einrichtungen (11, 12) mit einer Vielzahl von Antenneneinheiten (19, 20, 21, 22, 26, 27), die in definierter Verteilung auf einer Kugeloberfläche (17) der Sende-/Empfangs-Einrichtungen angeordnet sind, im Raum, derart, dass sich die Sende-/Empfangseinrichtungen mit bekanntem horizontalen Abstand h und vertikalen Abstand v in definierter Relativanordnung befinden,
- Emission eines Signals S1 über die Antenneneinheiten der ersten Sende-/Etnpfangs-Einrichtung (11) und Empfang des Signals SS1 über die Antenneneinheiten der zweiten Sende-/Empfangs-Einrichtung (12), Ermittlung des Abstandsvektors Ä₁ zwischen der ersten und zweiten Sende-/Empfangs-Einrichtung durch Bestimmung der Antenneneinheit (27) der zweiten Sende-/Empfangs-Einrichtung (12) mit maximaler Empfangsstärke des Signals S1 und Emission eines Signals S2 über die Antenneneinheiten der zweiten Sende-/Empfangs-Einrichtung (12) sowie Ermittlung des Abstandsvektors A_{z} zwischen der zweiten und der ersten Sende-/Empfangs-Einrichtung durch Bestimmung der Antenneneinheit (26) der ersten Sende-/Empfangs-Einrichtung (11) mit maximaler Empfangsstärke des Signals S2,
- Positionsbestimmung einer dritten, beliebig im lokalen Koordinatenraum (16) angeordneten Sende-/Empfangs-Einrichtung (13) durch Emission eines Signals S3. über die Antenneneinheiten (19, 20, 21, 22) der dritten Sende-/Empfangs-Einrichtung (13) und Empfang des Signals S3 über die Antenneneinheiten der ersten und zweiten Sende-/Empfangs-Einrichtung (11, 12), Bestimmung der Antenneneinheit (26, 27) der ersten Sende-/Empfangs-Einrichtung (11) und der zweiten Sende-/Empfangs-Einrichtung (12) mit maximaler Empfangsstärke des Signals S3, Ermittlung der Richtungsvektoren B₁ und B₂ sowie Bestimmung des Schnittpunkts der Richtungsvektoren zur Bestimmung der Position der dritten Sende-/Empfangseinrichtung (13).

2. System zur Bestimmung der Position einer beliebig im Raum angeordneten Sende-/Empfangs-Einrichtung (13) gegenüber zumindest zwei definiert zueinander im Raum angeordneten Sende-/Empfangs-Einrichtungen (11, 12) gemäß dem Verfahren nach Anspruch 1, mit zumindest drei Sende-/Empfangs-Einrichtungen (11, 12, 13), die jeweils eine Antenneneinrichtung (18) mit einer Vielzahl in definierter Verteilung auf einer Kugeloberfläche (17) angeordneten Antenneneinheiten (19, 20, 21, 22) und eine Signalerzeugungseinrichtung (25) aufweisen, von denen zwei Sende-/Empfangs-Einrichtungen (11, 12) als zumindest temporär ortsfest in einem lokalen Koordinatenraum (16) angeordnete Einrichtungen ausgeführt sind und die weitere Sende-/Empfangs-Einrichtung (13) relativ zu den Einrichtungen bewegbar ist.

3. System nach Anspruch 2,
**dadurch gekennzeichnet,**
**dass** die Sende-/Empfangs-Einrichtungen (11, 12, 13) eine Prozessoreinrichtung aufweisen und die Signalerzeugungseinrichtung in Abhängigkeit von der Prozessoreinrichtung Signale erzeugt.

4. System nach Anspruch 3,
**dadurch gekennzeichnet,**
**dass** die Prozessoreinrichtung zur Identifikation einer Antenneneinheit (19, 20, 26, 27) der Antenneneinrichtung (18) durch Vergleich der Empfangsstärke der von den Antenneneinheiten empfangenen Signale S1, S2, S3 dient.

## Claims

1. A method for position determination in a space comprising the procedural steps:
- definition of a local co-ordinate space (16) through the arrangement of at least two transmitter/receiver devices (11, 12) with a number of antenna units (19, 20, 21, 22, 26, 27), arranged with a defined distribution on a spherical surface (17) of the transmitter/receiver units, in a space, in such a way that the transmitter/receiver devices are in defined relative positions at known horizontal distance h and vertical distance v,
- emission of a signal S1 via the antenna units of the first transmitter/receiver device (11) and receiving of the signal S1 via the antenna units of the second transmitter/receiver device (12), determination of the distance vector Ä₁ between the first transmitter/receiver device and the second transmitter/receiver device through determining the antenna unit (27) of the second transmitter/receiver device (12) with the maximum receiving strength of the signal S1 and emission of a signal S2 via the antenna units of the second transmitter/receiver device (12) as well as determination of the distance vector Ä₂ between the second and the first transmitter/receiver device through determining the antenna unit (26) of the first transmitter/receiver device (11) with maximum receiving strength of the signal S2,
- position determination of a third transmitter/receiver device (13) arranged anywhere in the local co-ordinate space (16) through emission of a signal S3 via the antenna units (19, 20, 21, 22) of the third transmitter/receiver device (13) and receiving of the signal S3 via the antenna units of the first and second transmitter/receiver devices (11, 12), determination of the antenna units (26, 27) of the first transmitter/receiver device (11) and the second transmitter/receiver device (12) with maximum receiving strength of the signal S3, determining the direction vectors B₁ and B₂ as well as determining the intersection of the direction vectors for determining the position of the third transmitter/receiver device (13).

2. The system for determining the position of a transmitter/receiver device (13) arranged anywhere in a space in relation to at least two transmitter/receiver devices (11, 12) arranged in the space at defined positions with regard to each other in accordance with the method according to claim 1, with at least three transmitter/receiver devices (11, 12, 13), which each have an antenna device (18) with a number of antenna units (19, 20, 21, 22) arranged with a defined distribution on a spherical surface (17) and a signal generating unit (25), and of which two transmitter/receiver devices (11, 1.2) are at least temporarily fixed in a local co-ordinate space (16) and the other transmitter/receiver device (13) is movable relative to the devices.

3. The system according to claim 2,
**characterized in that**
the transmitter/receiver devices (11, 12, 13) comprise a processor unit and the signal generating device produces signals in dependence on the processor unit.

4. The system according to claim 3,
**characterized in that**
the processor unit is used to identify an antenna unit (19, 20, 26, 27) of the antenna device (18) by comparing the receiving strength of the signals S1, S2, S3 received by the antenna units.

## Revendications

1. Procédé pour la détermination de position dans l'espace, présentant les étapes de procédé suivantes :
- définition d'un espace de coordonnées local (16) par disposition dans l'espace d'au moins deux dispositifs émetteurs/récepteurs (11, 12) avec une pluralité d'unités d'antenne (19, 20, 21, 22, 26, 27) disposées suivant une distribution définie sur une surface sphérique (17) des dispositifs émetteurs/récepteurs, de telle manière que les dispositifs émetteurs/récepteurs se trouvent dans une position relative définie à une distance horizontale h et à une distance verticale v connues,
- émission d'un signal S1 par les unités d'antenne du premier dispositif émetteur/récepteur (11) et réception du signal S1 par les unités d'antenne du deuxième dispositif émetteur/récepteur (12), saisie du vecteur de distance Ä₁ entre le premier et le deuxième dispositifs émetteurs/récepteurs par détermination de l'unité d'antenne (27) du deuxième dispositif émetteur/récepteur (12) avec une intensité maximale de réception du signal S1, et émission d'un signal S2 par les unités d'antenne du deuxième dispositif émetteur/récepteur (12) ainsi que saisie du vecteur de distance Ä₂ entre le deuxième et le premier dispositifs émetteurs/récepteurs par détermination de l'unité d'antenne (26) du premier dispositif émetteur/récepteur (11) avec une intensité maximale de réception du signal S2,
- détermination de position d'un troisième dispositif émetteur/récepteur (13) situé de manière quelconque dans l'espace de coordonnées local (16) par émission d'un signal S3 par les unités d'antenne (19, 20, 21, 22) du troisième dispositif émetteur/récepteur (13) et réception du signal S3 par les unités d'antenne du premier et du deuxième dispositifs émetteurs/récepteurs (11, 12), détermination de l'unité d'antenne (26, 27) du premier dispositif émetteur/récepteur (11) et du deuxième dispositif émetteur/récepteur (12) avec une intensité maximale de réception du signal S3, saisie des vecteurs directionnels B₁ et B₂ ainsi que détermination du point d'intersection des vecteurs directionnels pour la détermination de position du troisième dispositif émetteur/récepteur (13).

2. Système pour la détermination de position d'un dispositif émetteur/récepteur (13) situé de manière quelconque dans l'espace relativement à au moins deux dispositifs émetteurs/récepteurs (11, 12) situés de manière définie entre eux dans l'espace suivant le procédé selon la revendication 1, avec au moins trois dispositifs émetteurs/récepteurs (11, 12, 13) présentant chacun un dispositif d'antennes (18) avec une pluralité d'unités d'antenne (19, 20, 21, 22) disposées suivant une distribution définie sur une surface sphérique (17) et un dispositif de génération de signaux (25), parmi lesquels deux dispositifs émetteurs/récepteurs (11, 12) sont réalisés comme dispositifs situés de manière au moins temporairement fixe dans un espace de coordonnées local (16), l'autre dispositif émetteur/récepteur (13) étant mobile relativement aux dispositifs.

3. Système selon la revendication 2,
**caractérisé en ce que**
les dispositifs émetteurs/récepteurs (11, 12, 13) présentent un dispositif de processeur et **en ce que** le dispositif de génération de signaux génère des signaux en fonction du dispositif de processeur.

4. Système selon la revendication 3,
**caractérisé en ce que**
le dispositif de processeur sert à l'identification d'une unité d'antenne (19, 20, 26, 27) du dispositif d'antennes (18) par comparaison de l'intensité de réception des signaux S1, S2, S3 reçus par les unités d'antenne.
